Europäisches Patentamt

European Patent Office

Office européen des brevets

(19)

(11) Veröffentlichungsnummer: **0 031 017**
**A1**

(12) EUROPÄISCHE PATENTANMELDUNG

(21) Anmeldenummer: **80106866.9**

(51) Int. Cl.³: **G 11 B 23/04**

(22) Anmeldetag: **07.11.80**

(30) Priorität: **14.12.79 DE 2950353**

(43) Veröffentlichungstag der Anmeldung:
**01.07.81  Patentblatt  81/26**

(84) Benannte Vertragsstaaten:
**BE FR LU NL**

(71) Anmelder: **Sonopress Gesellschaft für Tonträgerherstellung mbH**
**Carl-Bertelsmann-Strasse 161**
**D-4830 Gütersloh 1(DE)**

(72) Erfinder: **Winkelmann, Klaus**
**Kösliner Strasse 10**
**D-4800 Bielefeld(DE)**

(74) Vertreter: **Patentanwälte Dr. Solf & Zapf**
**Postfach 13 02 19**
**D-5600 Wuppertal 1(DE)**

(54) Verfahren zum Aufwickeln von Magnetbändern auf Bandwickel einer Magnetbandkassette sowie Vorrichtung zur Durchführung des Verfahrens.

(57)  Die Erfindung betrifft ein Verfahren zum Aufwickeln von Magnetbändern auf Bandwickel einer Magnetbandkassette, wobei eine Kassette vorzugsweise ohne eigentliche Führungsmittel für das Magnetband (12) verwendet wird, die zumindest einseitig eine mit einer Kunststoffolie oder dergleichen abgedeckte Öffnung (20) im Bereich zumindest eines Bandwickels (10,11) aufweist. Dabei wird beim Aufwickeln von außen auf die Folie (21) oder dergleichen gedrückt, so daß die Folie oder dergleichen an zumindest einer Wickelkante anliegt. In der Vorrichtung zur Durchführung des Verfahrens wird das Magnetband (12) auf einen Wickelkern (10,11) oder von einem Wickelkern auf einen anderen Wickelkern gespult, wobei zumindest eine Luftdüse, die auf ein Fenster (20) der in der Vorrichtung gelagerten Kassette gerichtet ist, vorgesehen ist, und die Vorrichtung Mittel aufweist, mit denen Druckluft durch die Düse geleitet werden kann.

FIG. 3

- 1 -

Verfahren zum Aufwickeln von Magnetbändern auf
Bandwickel einer Magnetbandkassette sowie Vorrichtung zur Durchführung des Verfahrens

Die Erfindung betrifft ein Verfahren und eine Vorrichtung
zum Aufwickeln von Magnetbändern auf Bandwickel einer
Magnetbandkassette, vorzugsweise einer Kompaktkassette.

Die auf Bandwickel, insbesondere einer Kompaktmagnetbandkassette, aufzuwickelnden Magnetbänder sind sehr
schmal und dünn und bestehen in der Regel aus einem
weichen Material. Aus diesen Gründen treten häufig
Schwierigkeiten beim Aufwickeln der Bänder auf die
Wickelkerne auf, weil insbesondere die hohen Wickelgeschwindigkeiten die Bandführung erschweren. Die Erfindung befaßt sich vornehmlich mit dem Aufwickeln des
Magnetbandes beim Aufnahmebetrieb, wobei Kassetten ohne
Führungsmittel verwendet werden. Das Aufnehmen wird mit
schnellaufenden Vorrichtungen durchgeführt, wobei es
zum Festlaufen des Magnetbandes durch Abrutschen vom
Bandwickel, teller- oder stufenförmige Ausbildung der
Bandwickel, Schlaufenbildung und ggf. Umschlingung
der Tonwelle kommen kann.

BAD ORIGINAL

Um diese Funktionsstörungen zu vermeiden, sind eine Reihe von Vorrichtungen entwickelt worden, die innerhalb der Kassette angeordnet sind und die genaue Bandführung gewährleisten sollen. Diese bekannten Konstruktionen nehmen jedoch nicht nur Raum in Anspruch, der ohnehin begrenzt zur Verfügung steht, sondern durch diese Vorrichtungen werden die Kassetten auch relativ teuer. Insofern kommen die bekannten Lösungen insbesondere für Kompaktkassetten einfacher Art nicht in Frage, die in Kassettenrecordern oder dergleichen Verwendung finden sollen und billige Massenartikel darstellen.

Aufgabe der Erfindung ist, ein Verfahren und eine Vorrichtung aufzuzeigen, mit denen eine genaue Bandführung ohne aufwendige Mittel beim Auf- und Abwickeln möglich ist.

Diese Aufgabe wird erfindungsgemäß dadurch gelöst, daß eine Kassette, vorzugsweise ohne eigentliche Führungsmittel für das Magnetband, verwendet wird, die zumindest einseitig eine mit einer Kunststoffolie oder dergleichen abgedeckte Öffnung im Bereich zumindest eines Bandwickels aufweist, und daß beim Aufwickeln von außen auf die Folie oder dergleichen gedrückt wird, so daß die Folie oder dergleichen an zumindest einer Wickelkante anliegt. Vorzugsweise wird von außen mit einem Luftstrahl gegen die Folie geblasen.

Zweckmäßigerweise weist die Kassette beidseitig mit einer lose angeordneten Kunststoffolie von innen abgedeckte Fenster im Bereich der Bandwickel auf. Dabei wird vorzugsweise einseitig Luft in eine Fensteröffnung auf die Folie geblasen. Selbstverständlich kann man aber auch von beiden Seiten Luft gleichzeitig und gleichmäßig, d.h. mit gleichem Luftdruck, gegen die in der Kassette lose gelagerten Folien blasen.

Nach einer besonderen Ausführungsform der Erfindung wird eine an sich bekannte Kompaktkassette verwendet, die beidseitig mittig zwischen den Achslöchern ein Sichtfenster besitzt, wobei die Fenster innenseitig jeweils durch eine lose in der Kassette an der Bodenplatte bzw. der Deckplatte lagernde elastische Kunststoffolie abgedeckt werden. Diese Kunststoffolienstücke überdecken vorzugsweise auch noch die Bandwickel und dienen somit gleichermaßen als Schutzfolien für die Bandwickel. Die Folien weisen gegenüber dem Magnetbandmaterial einen geringen Reibungskoeffizienten auf und verhindern die Reibung des Magnetbandes auf der Boden- und der Deckplatte der Kassette.

Die Erfindung kann selbstverständlich auch bei Kassetten verwirklicht werden, die bereits Führungsmittel aufweisen, wobei durch die Erfindung die Führung noch verbessert wird.

Anhand der Zeichnung wird die Erfindung beispielhaft näher erläutert. Es zeigen:

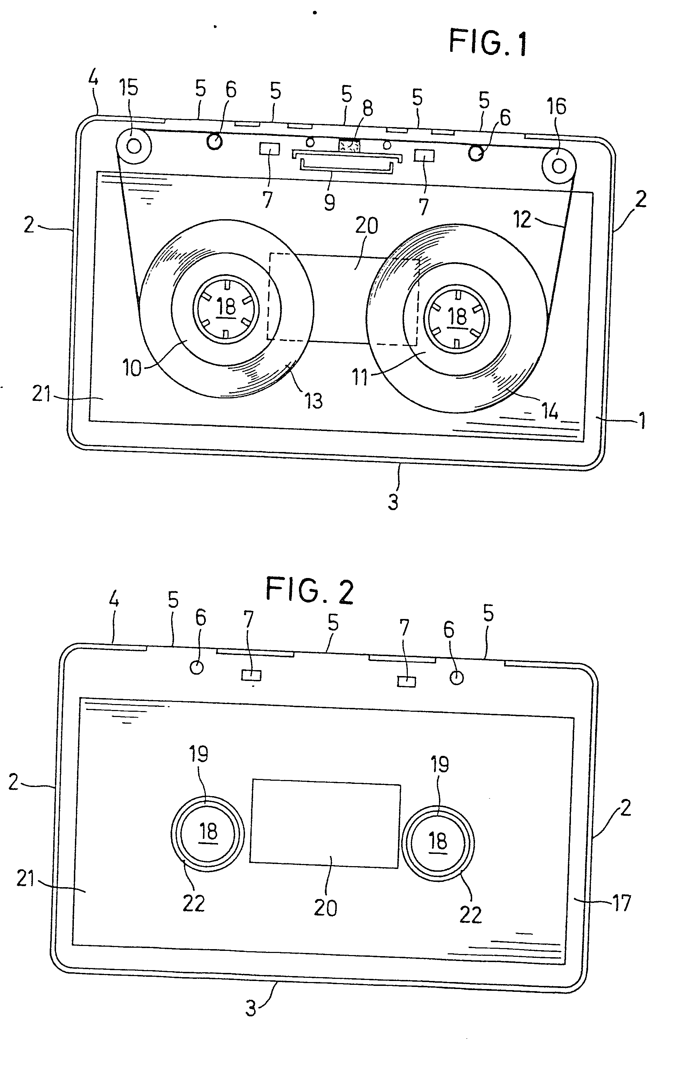

Fig. 1 eine Draufsicht auf die Bodenplatte einer Kompaktkassette,

Fig. 2 eine Draufsicht auf die Deckplatte,

Fig. 3 schematisch einen Längsschnitt durch die Kassette,

Fig. 4 schematisch eine an einem Feeder angeordnete Einrichtung zur Durchführung des erfindungsgemäßen Verfahrens.

Auf der rechteckigen Bodenplatte 1 sind senkrecht stehend zwei Seitenwände 2 sowie eine Vorderwand 4 und eine Rückwand 3 angeordnet. Die Vorderwand 4 ist - wie üblich - von Öffnungen 5 durchbrochen. Die Löcher 6 und 7 in der Bodenplatte 1 benachbart der Vorderwand 4 ermöglichen wie die Öffnungen 5 das Durchgreifen geräteseitiger Mittel (nicht dargestellt). Ferner sind benachbart der Vorderwand 4 in an sich bekannter Weise Andrückfilzplättchen 8 sowie eine Abschirmung 9 vorgesehen.

Auf der Bodenplatte 1 sind sich gegenüberliegend zwei Wickelkerne 10 und 11 drehbar angeordnet, die die Bandwickel 13 und 14 des Magnetbandes 12 tragen. Die Wickelkerne sowie die Bodenplatte haben Achslöcher 18 zur Aufnahme von geräteseitigen Drehachsen (nicht dargestellt). Das Magnetband 11 läuft von einem Bandwickel zum anderen über die Rollen 15 und 16, die ebenfalls auf der Bodenplatte 1 drehbar gelagert sind.

Die Deckplatte 17 weist ebenfalls zwei Seitenwände 2 sowie eine Rückwand 3 und eine Vorderwand 4 auf und besitzt auch Öffnungen 5 und Löcher 6 und 7. Durch das Aufeinandersetzen von Deckplatte 17 und Bodenplatte 1 entsteht das Gehäuse bzw. die Kassette, in der das Magnetband 12 untergebracht ist. Die Deckplatte 17 besitzt außerdem entsprechend wie die Bodenplatte 1 Achslöcher 18 und um die Achslöcher herum je einen Ringsteg 19 zur Lagerung der Wickelkerne 10 und 11.

Im dargestellten Beispiel weist die Kassette keine bekannten Wickel zur Führung des Magnetbandes auf. Jedoch liegt es auch im Rahmen der Erfindung, Kassetten mit üblichen Bandführungsmitteln zu verwenden.

Erfindungswesentlich ist, daß in der Deckplatte 17 und/ oder der Bodenplatte 1 im Bereich zwischen den Wickelkernen 10 und 11 ein Fenster 20 vorgesehen ist, das vorzugsweise zumindest so lang bemessen ist, wie der lichte freie Abstand zwischen den Wickelkernen 10 und 11 beträgt. Ferner ist in Kombination mit den Fenstern 20 wesentlich, daß zwischen der Bodenplatte 1 und den Wickelkernen 10, 11 und/oder zwischen der Deckplatte 17 und den Wickelkernen 10, 11 eine biegsame, elastische, vorzugsweise durchsichtige, Kunststoffolie 21 mit ggf. Achslöchern 22 lose gelagert angeordnet ist. Das Folienmaterial sollte zweckmäßigerweise gegenüber dem Magnetbandmaterial einen sehr geringen Reibungskoeffizienten aufweisen. Selbstverständlich ist es aber auch möglich, die Folien 21 im Bereich der Fenster 20 so zu befestigen, daß sie dennoch nach innen elastisch durchbiegsam sind.

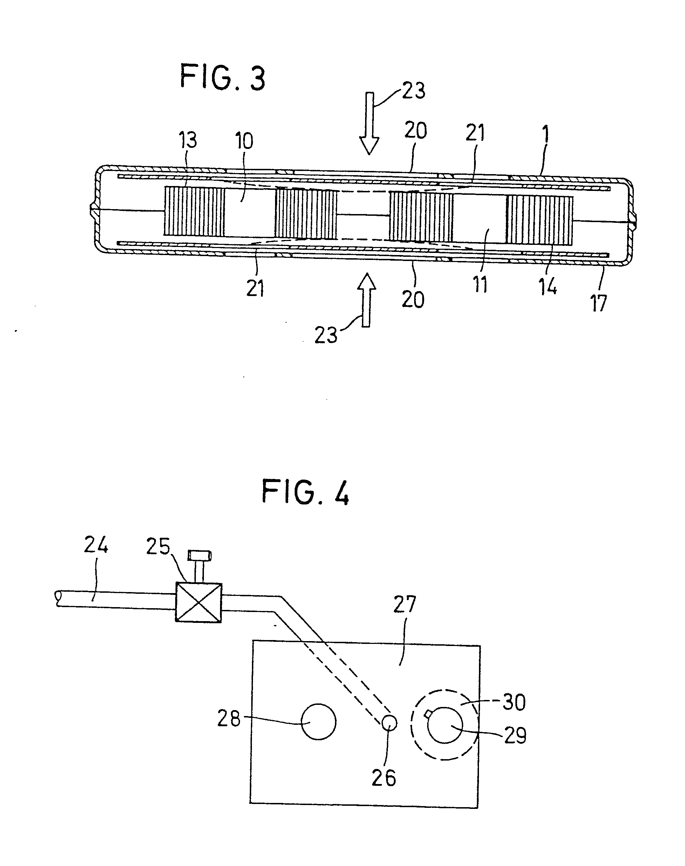

Die dargestellten Kassetten sind an sich bekannt. Nach der Erfindung wird nun beim Umspulen des Magnetbandes vorzugsweise mit einem Luftstrahl von außen gegen die Folie geblasen. Dabei hat sich in überraschender Weise gezeigt, daß daraus ein einwandfrei gerade geführter Bandwickel entsteht. Es ist nicht ohne weiteres einzusehen, woraus die kantengenaue Wicklung resultiert. Möglicherweise hängt die Folie - wie in Fig. 3 gestrichelt gezeichnet - bogenförmig durch und liegt jeweils nur an den Außenkanten der Bandwickel an, so daß ein gleichmäßiges Andrücken an den Kanten oder im Bereich der Kanten der Bandwickel erfolgt.

Das Andrücken kann selbstverständlich auch mit einem Stift oder dergleichen erfolgen, sofern die gleiche Wirkung erzielt wird wie mit dem Luftstrahl 23. Es

- 6 -

kann einseitig gedrückt werden, wenn nur eine Fenster-Folienkombination vorhanden ist; es kann aber auch zweiseitig gleichmäßig angedrückt werden, wenn beidseitig der Kassette eine Fenster-Folienkombination angeordnet ist. Nach einer zweckmäßigen Ausführungsform der Erfindung wird jedoch bei einer beidseitigen Fenster-Folienkombination nur einseitig mit einem Luftstrahl eine Folie angedrückt. Diese Variante des erfindungsgemäßen Verfahrens ergibt eine stufenlose, ebene Ausbildung der Bandwickel, wie sie derzeit nur mit sehr komplizierten, bisher bekannten Mitteln erzielt werden konnte.

Eine Einrichtung zur Durchführung des erfindungsgemäßen Verfahrens kann z. B. bei einem Aufnahme- und Wiedergabegerät oder dergleichen oder bei einem Gerät zur Herstellung der Kassette bzw. Bestückung der Kassette mit einem Magnetband vorgesehen sein, in denen das Magnetband auf einen Wickelkern oder von einem auf den anderen Wickelkern gespult wird. Die erfindungsgemäße Einrichtung zeichnet sich durch zumindest eine Luftdüse aus, die auf das Fenster 20 der im Gerät gelagerten Kassette gerichtet ist, wobei das Gerät Mittel aufweist, mit denen Druckluft durch die Düse geleitet werden kann. Nach einer anderen Ausführungsform der Erfindung ist anstelle einer Düse ein gegen die Folie fahrbarer Stift vorgesehen.

In Fig. 4 ist schematisch eine Einrichtung mit einer Luftdüse an einem Feedergerät dargestellt, wobei das Feedergerät nicht abgebildet ist. Die erfindungsgemäße Zusatzeinrichtung besteht aus einer Luftleitung 24 mit einem Regelventil 25 zur Feineinstellung des Luftstrahldruckes. Die Luftleitung mündet in einer Öffnung 26 auf der hinteren Seite eines Anschlagblechs 27. Auf dem Anschlagblech 27 wird die Kassette (nicht dargestellt) auf die Achsen 28 und 29 gesteckt. Die Achse 29 steht mit einem Aufspulmotor 30 in Verbindung und kann von letzterem angetrieben werden. Wenn also eine Kassette auf das Anschlagblech gesteckt wird, wobei die Achsen 28 und 29 durch die Öffnungen 18 der Kassette greifen, wird Luft durch die Düse 26 gegen das Fenster 20 der Kassette geblasen. Gleichzeitig wird der Motor eingeschaltet und dadurch die Achse 29 dergestalt angetrieben, daß das Band 12 von einem Wickel auf den anderen Wickel gespult wird. Selbstverständlich ist es aber auch möglich, anstelle der Luftleitung einen Stift durch die Öffnung 26 zu führen.

– 1 –

Ansprüche:

1. Verfahren zum Aufwickeln von Magnetbändern auf Bandwickel einer Magnetbandkassette, d a d u r c h g e k e n n z e i c h n e t, daß eine Kassette vorzugsweise ohne eigentliche Führungsmittel für das Magnetband verwendet wird, die zumindest einseitig eine mit einer Kunststoffolie oder dergleichen abgedeckte Öffnung im Bereich zumindest eines Bandwickels aufweist, und daß beim Aufwickeln von außen auf die Folie oder dergleichen gedrückt wird, so daß die Folie oder dergleichen an zumindest einer Wickelkante anliegt.

2. Verfahren nach Anspruch 1, d a d u r c h g e k e n n z e i c h n e t, daß von außen mit einem Luftstrahl gegen die Folie oder dergleichen geblasen wird.

oder

3. Verfahren nach Anspruch 1 und/2, d a d u r c h g e k e n n z e i c h n e t, daß eine Kassette verwendet wird, die zumindest ein beidseitig mit einer lose angeordneten Kunststoffolie von innen abgedecktes Fenster im Bereich eines Bandwickels aufweist.

4. Verfahren nach einem oder mehreren der Ansprüche 1 bis 3, dadurch gekennzeichnet, daß eine Kassette verwendet wird, die in der Deckplatte und/oder der Bodenplatte im Bereich zwischen den Wickelkernen ein Fenster aufweist, das vorzugsweise zumindest so lang bemessen ist, wie der lichte freie Abstand zwischen den Wickelkernen beträgt.

5. Verfahren nach Anspruch 4, dadurch gekennzeichnet, daß eine Kassette verwendet wird, bei der zwischen der Bodenplatte und den Wickelkernen und/oder zwischen der Deckplatte und den Wickelkernen eine biegsame elastische, vorzugsweise durchsichtige Kunststoffolie mit ggf. Achslöchern lose gelagert angeordnet ist.

6. Vorrichtung zur Durchführung des Verfahrens nach Anspruch 1 bis 5, in der das Magnetband auf einen Wickelkern oder von einem Wickelkern auf einen anderen Wickelkern gespult wird, gekennzeichnet durch zumindest eine Luftdüse, die auf ein Fenster (20) der in der Vorrichtung gelagerten Kassette gerichtet ist, wobei die Vorrichtung Mittel aufweist, mit denen Druckluft durch die Düse geleitet werden kann.

7. Vorrichtung zur Durchführung des Verfahrens nach Anspruch 1 bis 5, in der ein Magnetband auf einen Wickelkern oder von einem auf einen anderen Wickelkern gespult wird, gekennzeichnet durch zumindest einen gegen die Folie eines Fensters (20) fahrbaren Stift.

8. Vorrichtung nach Anspruch 6, g e k e n n z e i c h -
n e t  d u r c h  eine Luftleitung (24) mit einem
Regelventil (25) sowie ein Anschlagblech (27) mit
einer Düsenöffnung (26) und zwei Aufspulachsen
(28,29), wobei mindestens eine Achse mit einem
Aufspulmotor (30) in Verbindung steht.

FIG.1

FIG. 2

# FIG. 3

# FIG. 4

## EUROPÄISCHER RECHERCHENBERICHT

Europäisches Patentamt

Nummer der Anmeldung

EP 80 10 6866

### EINSCHLÄGIGE DOKUMENTE

| Kategorie | Kennzeichnung des Dokuments mit Angabe. soweit erforderlich, der maßgeblichen Teile | betrifft Anspruch |
|---|---|---|
| | US - A - 4 085 907 (O. SUZUKI)<br>* Spalte 2, Zeile 26 bis Spalte 3, Zeile 33; Figuren *<br>& DE - A - 2 620 728 | 1,3,5 |
| | US - A - 4 102 515 (L.L. MILANTS)<br>* Spalte 2, Zeile 33 bis Spalte 4, Zeile 2; Figuren *<br>& DE - A - 2 501 914 | 1,3,5 |
| | DE - A - 2 641 532 (FUJI)<br>* Seiten 6-9; Figuren * | 1,5 |
| P | GB - A - 2 033 873 (ICM)<br>* Seite 1, Zeile 98 bis Seite 2, Zeile 21; Figuren *<br>& DE - A - 2 941 294 | 1,2,5 |
| A | US - A - 4 174 080 (H. YAMADA) | 1,5 |
| A | US - A - 3 677 497 (A.B. LOWRY) | 6 |
| A | US - A - 3 697 014 (A.B. LOWRY) | 6 |
| A | US - A - 3 140 832 (K. CECH) | 7 |

KLASSIFIKATION DER ANMELDUNG (Int Cl )

G 11 B 23/04

RECHERCHIERTE SACHGEBIETE (Int. Cl.3)

G 11 B 23/04
15/60

KATEGORIE DER GENANNTEN DOKUMENTE

X: von besonderer Bedeutung
A: technologischer Hintergrund
O: nichtschriftliche Offenbarung
P. Zwischenliteratur
T. der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie. übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 20-03-1981 | DECLAT |

EPA form 1503.1 06.78